# EUROPEAN PATENT APPLICATION

(11) **EP 1 394 714 A2**
(43) Date of publication of application: **03.03.2004**
(21) Application number: 03254258.1
(22) Date of filing: 04.07.2003
(51) Int. Cl.: G06F 17/60, G06F 3/033, G06F 3/12, G06K 15/02, B41J 2/175

(54) **Setting device parameters to values associated with selected device-performable task**

(30) Priority: 11.07.2002 US 193196
(71) Applicant: Hewlett-Packard Development Company, L.P., Houston, TX 77070 (US)
(72) Inventor: Ankrum, Corlene M., Vancouver, WA 98686 (US); Page, Adam F., Vancouver, WA 98664 (US)
(74) Representative: Jackson, Richard Eric

(57) **Abstract**

In a method (100) of an embodiment of the invention that is disclosed, a user selects a desired task from a number of tasks that are performable by a device that has a number of parameters (102). A subset of the parameters is associated with the desired task. Each parameter of the subset is set to a value associated with the desired task (104).

## Description

### BACKGROUND

Printers, as well as other image-forming devices and other types of devices, have become increasingly sophisticated and complex. For example, even a low-end inkjet printer can usually print high quality prints of photographs taken with a digital camera. The same printer may also be used to print high quality black-and-white text-oriented documents, as well as lower-quality draft documents to conserve ink.

To perform such wide-ranging functionality, most printers today have a large number of parameters that can be individually set within their printer drivers, which are generally device-specific control programs that enable a computer to work with a particular device. A user may have to particularly set a number of different parameters within the printer driver program to optimally utilize the printer for an intended use.

The large number of parameters that can be set, however, can become burdensome for users, especially novice users. Incorrectly setting the parameters, or ignoring them completely, for instance, may result in a user not achieving the desired output quality from the printer that he or she had intended. Some combinations of the settings may further not be allowed.

### SUMMARY OF THE INVENTION

In a method of an embodiment of the invention, a user selects a desired task from a number of tasks that are performable by a device that has a number of parameters. A subset of the parameters is associated with the desired task. Each parameter of the subset is set to a value associated with the desired task.

### BRIEF DESCRIPTION OF THE DRAWINGS

The drawings referenced herein form a part of the specification. Features shown in the drawings are meant as illustrative of only some embodiments of the invention, and not of all embodiments of the invention, unless otherwise explicitly indicated, and implications to the contrary are otherwise not to be made.
FIG. 1 is a flowchart of a method according to an embodiment of the invention.
FIG. 2 is a flowchart of a more detailed method, according to an embodiment of the invention, which is consistent with the method of FIG. 1.
FlGs. 3 and 4 are diagrams of an example graphical user interface (GUI) window, according to an embodiment of the invention.
FIG. 5 is a block diagram of a system according to an embodiment of the invention.

### DETAILED DESCRIPTION OF THE DRAWINGS

In the following detailed description of exemplary embodiments of the invention, reference is made to the accompanying drawings that form a part hereof, and in which is shown by way of illustration specific exemplary embodiments in which the invention may be practiced. These embodiments are described in sufficient detail to enable those skilled in the art to practice the invention. Other embodiments may be utilized, and logical, mechanical, and other changes may be made without departing from the spirit or scope of the present invention. For example, whereas the invention is partially described in relation to a printer, such as an inkjet printer, it is more broadly applicable to any type of image-forming device, and, more broadly still, to any type of device. The following detailed description is therefore not to be taken in a limiting sense, and the scope of the present invention is defined only by the appended claims.

### Overview

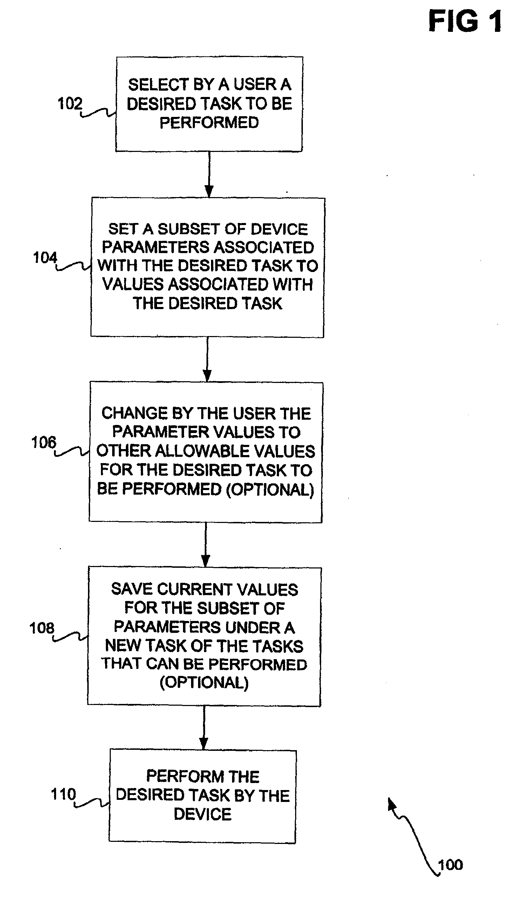

FIG. 1 shows a method 100 according to an embodiment of the invention. The method 100, like other methods of embodiments of the invention, can be implemented as a computer program on a computer-readable medium. The computer-readable medium may be a removable storage medium, such as a floppy disk or an optical disc, like a CD-ROM, or a fixed storage medium, such as a hard disk drive or a semiconductor memory, like a random-access memory (RAM) or a read-only memory (ROM).

A user selects a desired task to be performed by a device from a number of such tasks (102). A task is generally and non-restrictively defined as a complete and specific operation to be performed by the device. In the context of a printer, for instance, the desired task may be to print a high quality borderless photograph, a lower quality draft document, another type of print job, and so on.

The device has a number of parameters, each of which has a number of values to which it can be set. A parameter is generally and non-restrictively defined as an option of the device that can be set to one or more of a number of different values to affect the operation of the device in some way. In the context of a color inkjet printer, for instance, the parameters may include whether color and/or black-and-white ink should be used, the size of the media to be printed on, the type of the media to be printed on, and so on.

The desired task has associated therewith a subset of all the parameters that can be set. The subset of parameters can include, for instance, those parameters that are particularly affected by the desired task selected. For example, the task of printing a black-and-white text document may not have associated therewith any parameters relating to the color inks of the printer. As another example, the task of printing a borderless high quality color photographic print may not have associated therewith an ink-saving parameter that is applicable for lower quality printer output. Additional examples include borderless printing being available for a subset of all available paper sizes, and duplexing being available for media that support printing on both sides.

For each parameter of this subset, there are also allowable values associated with the desired task. A parameter that relates to the type of media to be printed on may have choices including inkjet paper, standard paper, photo paper, and glossy photo paper. However, the task of printing a black-and-white text document may have associated therewith for this parameter the values of inkjet paper and standard paper, and not the values of photo paper and glossy photo paper. This is because black-and-white text documents will not typically be printed on photo paper or glossy photo paper.

Within the allowable values for each parameter of the subset there is also a default, or initial value. Each parameter of the subset of device parameters associated with the desired task is thus set to its initial value (104), which is one of the allowable parameter values associated with the desired task. The initial values may be those that have been predetermined as optimal for the device to perform the desired task, in one embodiment. Furthermore, the user optionally can change the initial values to which the parameters of the subset have been set, to other allowable parameter values associated with the desired task selected (106). The user may also optionally save the current values for the subset of parameters, as he or she may have changed them from their initial values, under a new task (108).

For example, the user may initially have selected the task of printing a high quality color photographic print, which may have an initial value of photo paperassociated with the media type parameter. However, the user may regularly purchase glossy photo paper, and therefore change the value of this parameter to glossy photo paper. To avoid having to change this parameter value every time the user selects this task, he or she may save the current parameter values under a new task, such as the task of printing a high quality color photographic print on glossy photo paper. The next time the user selects a task to be performed by the printer, this newly saved task will then be displayed as one of the choices.

Furthermore, the default or initial values that are selected can in one embodiment differ across devices that belong to the same product category, such as color inkjet printers, but which have design differences intended for different groups of users. For instance, the default media type associated with the task of printing a black-and-white text document with a color inkjet printer that is intended for use by students may differ from that associated with the same task with a color inkjet printer that is intended for use by business professionals. Additionally, the default or initial values can differ across regions for the same device. For example, a specific color inkjet printer model may be available in both France and the United States. For France, the default media size associated with the task of printing a black-and-white text document may be A4, whereas for the United States, the default media size associated with this same task may be letter.

Finally, the method 100 is concluded by the device in question performing the desired task selected (110). That is, the device performs the desired task after it has at least set the subset of device parameters associated with this task to values associated with this task. The user may have also thereafter changed one or more of these device parameters to other allowable values associated with the desired task, and may have saved the current device parameter values under or as a new task, for later selection.

### Method and Graphical User Interface

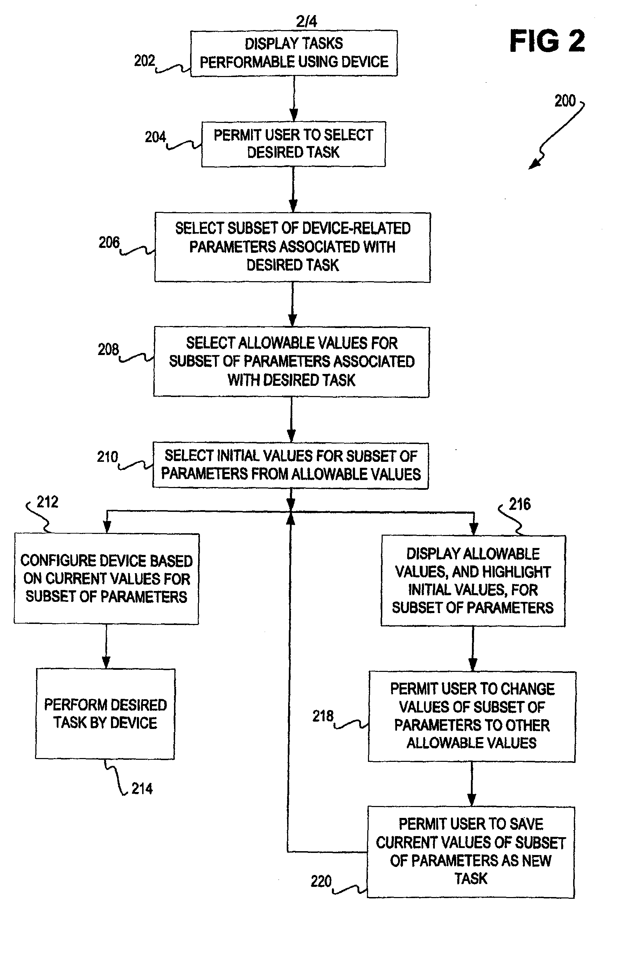

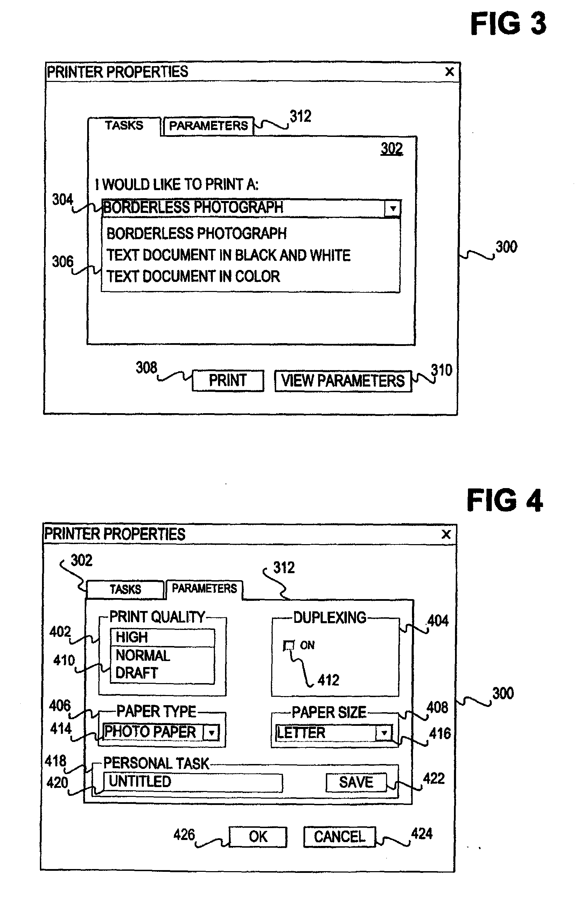

FIG. 2 shows a method 200, according to an embodiment of the invention, which can be performed in conjunction with a graphical user interface (GUI). The GUI may be that for a driver program of a device. First, the method 200 displays a number of tasks that are performable using the device (202). FIG. 3 shows an example GUI window 300 in which device-performable tasks can be displayed, where the device is specifically a printer. Within the tasks tabbed frame 302, a drop-down text box 304 is shown for selecting the performable task from the task list 306. The user thus clicks within the text box 304 to select one of the tasks from the task list 306, which is then displayed in the text box 304. When finished, the user may select the print button 308, the view parameters button 310, or the parameters tabbed frame 312, as will be described.

Referring back to FIG. 2, once the user has selected the desired task to be performed from the list of tasks displayed (204), s uch that the method 200 has received indication as to the desired task selected by the user, the method 200 selects, or determines, for a subset of parameters associated with the desired task, initial parameter values for that task. This process is divided into 206, 208, 210. First, the method 200 selects, or determines, the subset of device-related parameters that are associated with the desired task selected, from all possible parameters of the device (206). That is, the method 200 selects the parameter subset based on the desired task selected, which may be the subset of parameters that are affected by performing the desired task with the device.

Second, the method 200 selects, or determines, allowable values for each of the device-related parameters of the subset, as associated with the desired task (208). That is, the method 200 selects the values that are allowable for each parameter of the subset of parameters, based on the desired task selected. Finally, of the allowable values for each parameter of the subset of parameters, the method 200 selects an initial, or default value (210). 206, 208, and 210 may be simultaneously performed by, for instance, looking up the desired task in a previously established database that lists the subset of parameters for the task, and the allowable values and the initial value for each of these parameters.

The method 200 next either configures the device based on the current values of the subset of device-related parameters (212), or displays the allowable values for the subset of parameters, including highlighting the initial values (216). The method 200 performs either 212 or 216 after performing 210 based on the user's choice at 204. For example, if the user selects the print button 308 in FIG. 3, then the method 200 proceeds to 212, whereas if the user selects the view parameters button 310 in FIG. 3, or the parameters tabbed frame 312, then the method 200 proceeds to 216.

In the former case, the device is configured based on the current values for the subset of parameters (212). The current values in this instance are the initial values selected for the subset of parameters. Configuring the device based on the current parameter values means that the parameters of the subset are set to their current values, for example. Once this has been accomplished, the device then performs the desired task that has been selected by the user (214). That is, the method 200 controls the device to perform the desired task.

In the latter case, the allowable values for the subset of parameters are displayed, with the initial values of those allowable values highlighted (216). That is, not all the parameters of the device are displayed, but just the subset of parameters that have been selected for the desired task. Similarly, for the subset of parameters, not all the values are displayed, but just the allowable values for the desired task. The user is permitted or enabled to change the values of the subset of parameters to other allowable values (218). The user is also permitted to save the current values of the subset as a new task (220).

For example, selecting the view parameters button 310 in FIG. 3, or the parameters tabbed frame 312 in FIG. 3, causes the frame 312 to be displayed in the forefront within the window 300. This is shown in FIG. 4. In FIG. 4, the parameters tabbed frame 312 has areas displayed for four specific parameters: a print quality parameter area 402, a duplexing parameter area 404, a paper type parameter area 406, and a paper size parameter area 408. For the desired task selected when the tasks tabbed frame 302 was shown in the forefront within the window 300, the parameters corresponding to the areas 402, 404, 406, and 408 are the parameters of the subset of parameters selected for this desired task. The device may have other parameters, but they were not selected based on the desired task.

Similarly, for the parameters corresponding to the areas 402, 404, 406, and 408, the allowable values therefore that are associated with, or based on, the desired task selected by the user are displayed. The parameters may have other values, but they were not selected as allowable based on the desired task the user selected. For the print quality parameter area 402, the text box 410 shows three choices: high, normal, and draft, which are the allowable values for the print quality parameter. The high value is the initial value, and thus is displayed as highlighted. The user can choose one of the other allowable two values for this parameter, however.

For the duplexing parameter area 404, there is a check box 412 corresponding to the value on for the duplexing parameter. The initial value for this parameter is off, and thus is implicitly highlighted by having the check box 412 not initially checked. The user may check the box, however, to select the on value for this parameter. For the paper type parameter area 406, there is a drop-down text box 414, with the initial value for the paper type parameter, photo paper, highlighted. Selecting the box 414 may cause a list of other allowable values to be displayed, from which the user can choose. Similarly, for the paper size parameter area 408, there is a drop-down text box 416, with the initial value for the paper size parameter, letter, highlighted. Selecting the box 416 may cause a list of other allowable values to be displayed, from which the user can choose.

The user is thus not encumbered with the ability to change all the parameters of the device among all the possible values for the parameters. The parameters tabbed frame 312 lists a subset of the parameters, based on the desired task that is to be performed by the device, and shows allowable values for each of these parameters, also based on the desired task that is to be performed by the device. Non-allowable combinations are eliminated and confusion and uncertainty on the part of the user are, therefore, preferably reduced, if not eliminated.

Once the user has modified any of the initially highlighted values within the parameter areas 402, 404, 406, and 408, the personal task area 418 is enabled. The personal task area 418 permits the user to save under a new task the current values for the parameters within the areas 402, 404, 406, and 408, as one or more of which have been changed from their initial values. The default name of this new task is untitled, as indicated in the text box 420, but the user can and likely will enter his or her own name for the new task. Once this has been done, the user selects the save button 422 to save the current values as the new task with the name given.

To exit the parameters tabbed frame 312, and configure the device based on the current parameter values as may have been modified from the initial parameter values so that the device can perform the desired task, the user selects the OK button 426, or the tasks tabbed frame 302. This causes the tasks tabbed frame 302 to be displayed in the forefront of the window 300, as in FIG. 3, from which the user selects the print button 308 to configure the device (212 of FIG. 2) and have the device perform the desired task (214 of FIG. 2), as has been described. Alternatively, the user may choose the cancel button 424 in FIG. 4, which cancels any changes the user may have made to the initially highlighted values for the parameters shown in the parameters tabbed frame 312, and which also causes the tasks tabbed frame 302 to be displayed in the forefront of the window 300, as in FIG. 3.

### System

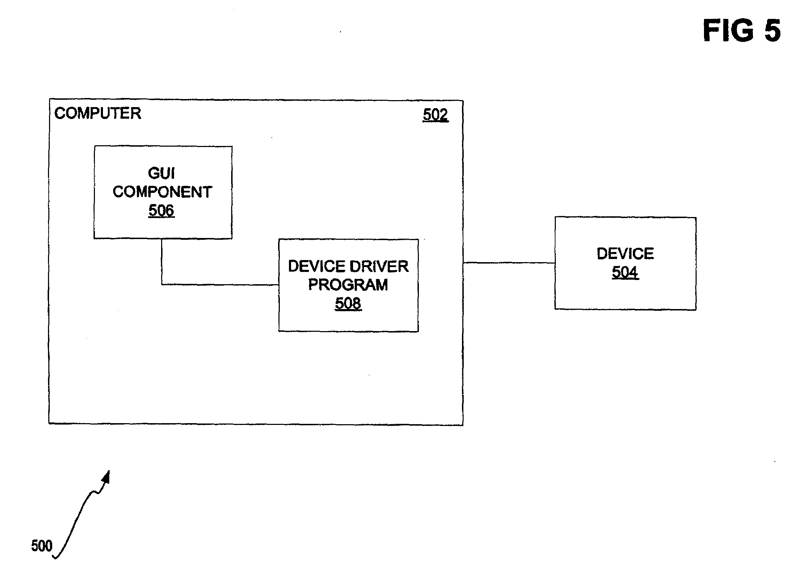

FIG. 5 shows a system 500, according to an embodiment of the invention. The system 500 can be used to implement the methods 100 and 200 of FIGS. 1 and 2, respectively, as well as to implement the graphical user interface (GUI) of FIGs. 3 and 4, in one embodiment of the invention. The system 500 includes a computer 502 communicatively coupled to a device 504. The computer 502 may be a desktop computer, a laptop computer, or another type of computerized device. The device 504 may be a peripheral device for the computer 502, such as an image-forming device, like a laser, inkjet, or other type of printer, or another type of device.

The computer 502 specifically includes a GUI component 506 and a device driver program 508. The GUI component 506 may be integrated with or separate from the device driver program 508. The GUI component 506, as is the device driver program 508, is a computer software program, made up of a number of computer software components, objects, sub-routines, modules, and so on. The GUI component 506 can be considered the means to perform its respective functionality. The GUI component 506, together with and/or separate from the driver program 508, may perform the methods of FIGs. 1 and 2, in one embodiment.

The user interacts with the GUI component 506 to select a desired task to be performed using the device 504. The driver program 508 sets parameters of the device 504. A subset of parameters is non-uniquely based on the desired task selected by the user within the GUI component 506. That is, a given parameter may be in more than one subset for more than one task selectable by the user. In interacting with the user, the GUI component 506 may utilize the GUI windows of FIGs. 3 and 4, in one embodiment.

The user may also interact with the GUI component 506 to change the specific values for the parameters of the subset that are allowed for the desired task selected by the user. As with the parameter subsets, specific values for the parameters may be allowable for more than one selectable task. Finally, the user may interact with the GUI component 506 to save the values for the parameters of the subset based on the desired task selected by the user under a new task, where the user has changed one or more of these values.

### Conclusion

It is noted that, although specific embodiments have been illustrated and described herein, it will be appreciated by those of ordinary skill in the art that any arrangement is calculated to achieve the same purpose may be substituted for the specific embodiments shown. This application is intended to cover any adaptations or variations of the present invention. For example, whereas an embodiment of the invention is partially described in relation to a printer, such as an inkjet printer, it is more broadly applicable to any type of image-forming device, and, more broadly still, to any type of device. Therefore, it is manifestly intended that only the claims and equivalents thereof limit embodiments of this invention.

## Claims

1. A method (100) comprising:
selecting by a user a desired task from a plurality of tasks performable by a device having a plurality of parameters (102); and,
setting each of a subset of the plurality of parameters associated with the desired task to a value associated with the desired task (104).

2. The method of claim 1, further comprising changing by the user one or more of the subset of the plurality of parameters to another value that is allowable for the device to perform the desired task (106).

3. The method of claim 2, further comprising saving a current value of each of the subset of the plurality of parameters under an associated new task of the plurality of tasks performable using the device (108).

4. The method of claim 1, further comprising performing the desired task by the device (110).

5. A method (200) comprising:
permitting a user to select a desired task from a plurality of tasks performable using a device (204);
selecting a subset of device-related parameters from a plurality of device-related parameters based on the desired task selected (206);
selecting a value for each device-related parameter of the subset of device-related parameters based on the desired task selected (210); and,
configuring the device based on the value selected for each device related-parameter of the subset of device-related parameters (212).

6. The method of claim 5, further initially comprising displaying the plurality of tasks performable using the device (202).

7. The method of claim 5, further comprising, after selecting the value for each device-related parameter of the subset of device-related parameters,
selecting one or more allowable values, inclusive of the value selected, for each device-related parameter of the subset of device-related parameters, based on the desired task selected (208);
permitting the user to change the value selected for any device-related parameter of the subset of device-related parameter to any other of the one or more allowable values for the device-related parameter (218).

8. The method of claim 7, further comprising, prior to selecting the one or more allowable values, displaying the subset of device-related parameters (216).

9. The method of claim 7, further comprising, after selecting the one or more allowable values,
displaying the one or more allowable values for each device-related parameter of the subset of device-related parameters (216); and,
highlighting the value selected for each device-related parameter of the subset of device-related parameters (216).

10. The method of claim 7, further comprising permitting the user to save the value selected for each device-related parameter of the subset of device-related parameters under an associated new task of the plurality of tasks performable using the device (220).
